(19) **Europäisches Patentamt**
**European Patent Office**
**Office européen des brevets**

(11) **EP 3 690 606 A1**

(12) **EUROPEAN PATENT APPLICATION**
published in accordance with Art. 153(4) EPC

(43) Date of publication:
**05.08.2020 Bulletin 2020/32**

(21) Application number: **18863696.3**

(22) Date of filing: **30.07.2018**

(51) Int Cl.:
**G06F 3/01** (2006.01)   **G06T 19/00** (2011.01)

(86) International application number:
**PCT/CN2018/097731**

(87) International publication number:
**WO 2019/062314 (04.04.2019 Gazette 2019/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2017 CN 201710932070**

(71) Applicant: **Fudan University**
**Yangpu, Shanghai 200433 (CN)**

(72) Inventors:
• **SONG, Zhijian**
**Shanghai 200433 (CN)**

• **YANG, Xueping**
**Shanghai 200433 (CN)**
• **WANG, Manning**
**Shanghai 200433 (CN)**
• **LI, Wensheng**
**Shanghai 200433 (CN)**
• **AN, Yong**
**Shanghai 200433 (CN)**

(74) Representative: **Zinkler, Franz et al**
**Schoppe, Zimmermann, Stöckeler**
**Zinkler, Schenk & Partner mbB**
**Patentanwälte**
**Radlkoferstrasse 2**
**81373 München (DE)**

(54) **VIRTUAL-REAL COMBINATION-BASED HUMAN ANATOMICAL STRUCTURE DISPLAY AND INTERACTION METHOD**

(57)   The present invention relates to the technical field of virtual-real combination-based scene display, and relates to a virtual-real combination-based human anatomical structure display and interaction method. The method comprises: using a virtual human anatomical structure model, a real human body model, a marker board, a handheld device, etc. to implement fusion of the real human body model and the virtual human anatomical structure model, displaying the top ten major systems of the human anatomical structure, and marking the names of major organs or tissue in each system.

FIG. 1

**Description**

FIELD OF THE INVENTION

The present disclosure belongs to the technical field of virtual-real combination-based scene display, and relates to a technology for real-time and interactive fusion of virtual scenes and real scenes. Specifically, it relates to a virtual-real combination-based human anatomical structure display and interaction method.

BACKGROUND OF THE INVENTION

Currently, display methods related to medical research, teaching, and popular science related to a human structure can be divided into four types: physical human models, human specimens, using video and image data, and virtual models of human bodies displayed by computers. The display method of the physical human models has low production and maintenance cost, and is the most popular form of human body structure display at home and abroad. This kind of display method can show the morphological structure of specific tissue and organs better through proper design supplemented by acoustic and optical effects. However, the information that it can display is relatively limited, it cannot truly and comprehensively reflect the overall information of the human structure, and lacks interactivity, thereby that audience's sense of participation and experience is insufficient. In another aspect, the display method of human specimens uses isolated specimens made after bio-plasticizing, which have strong authenticity, but in terms of other display effects, there are still the same limitations as the display method of the physical models. Considering a problem in the audience's mind, this kind of display method is more suitable for professional display, and is not suitable for large-scale production and display to the general public. In another aspect, the display method using video and image data can be used to demonstrate and explain a certain aspect surrounding the human structure, physiological function, and a certain disease in detail through image data which is specially produced. However, this kind of display method can only be passively accepted by the audience and lacks interaction. In another aspect, the display method of virtual models of human bodies displayed by computers is to build a three-dimensional model of the human body through virtual reality technology in the computer, and is to display the three-dimensional visualization result of tomographic images of the human specimen to the audience through the computer screen. The disadvantage of this kind of display method is that it cannot establish a direct connection with the real human body. It is not easy for the audience to understand the relevant information, and the interaction is not direct, in which a certain computer and anatomy expertise are required, thereby that the audience interaction is slightly difficult.

In summary, the current method methods of virtual-real combination-based human anatomical structure display and interaction, at home and abroad, generally suffer from such shortcomings as less information, poor interactivity, poor experience, and realism being not strong. Thus, most of them are mainly based on the display method of static human structure.

Based on the current state of the prior art, the inventors of the present application intend to provide a technology for real-time and interactive fusion of virtual scenes and real scenes, and in particular relates to a virtual-real combination-based human anatomical structure display and interaction method.

SUMMARY OF THE INVENTION

An object of the present disclosure is, based on the current state of the prior art, to provide a technology which is a method for real-time and interactive fusion of virtual scenes and real scenes, and in particular relates to a virtual-real combination-based human anatomical structure display and interaction method.

The present disclosure provides a virtual-real combination-based human anatomical structure display and interaction method, comprising: adopting a virtual model of a human anatomical structure, a physical model of a human, a marker board, and a handheld device, performing a fusion of the physical model of the human and the virtual model of the human anatomical structure, and displaying ten major systems of the human anatomical structure, wherein a model of the human anatomical structure is drawn on the maker board, the physical model of the human is fixed on the maker board and coincides with the drawn model of the human anatomical structure, and the method comprises:

(1) previewing a real scene by a camera of the handheld device, after identifying the maker board successfully, displaying the ten major systems of the human anatomical structure individually and simultaneously fusing the physical model of the human and the virtual model of the human anatomical structure, moving the handheld device so that the camera follows, in order to make an observation of each of the systems of the human anatomical structure from an arbitrary angle;

(2) selecting, by touching a display screen of the handheld device, an interest one of tissue or organs in the model of the human anatomical structure displayed on the display screen, and displaying the tissue or the organs in a single form, in which functions are introduced in words and an observation in detail is performed in an interaction manner by enlargements, reductions, and rotations; and

(3) selecting one of the tissue or the organs to be searched, so as to perform a variation of a texture-color of a corresponding one of the tissue or the organs, and moving the handheld device, in order to search the one of the tissue or the organs to be selected within a view area;

wherein in the step (1),
a transforming relationship of the physical model of the human being registered into a marker-board-space is performed as below:

(1) acquiring, by an infrared localizer and a probing tool, a transformation matrix M1 from a localizer-space to the marker-board-space; and

(2) selecting a set of points of features for the physical model of the human, representing the set of the points in a three-dimension data field for the virtual model of the human anatomical structure into {Vi}, acquiring {Pi} that represents coordinates of a set of points of features of the model of the human anatomical structure in a coordinate system of the localizer, transforming the set of the points into a coordinate system of the marker board represented into {Ii} by the transformation matrix M1 in the step (1), the sets of the points {Vi} and {Ii} being a relationship directly as below:

$$Ii = R*Vi+T \qquad\qquad formula\ (1)$$

wherein i=1,2...N, N is a number of the points of features of the physical model of the human to be selected, the best values of R and T are acquired by a point-cloud registration method based on a singular value decomposition, thereby obtaining the transforming relationship from the physical model of the human to an identification-board-space;

wherein the step of identifying the maker board, in the step (1), comprises:

(1) adopting a Gamma correction method to standardize a color-space for an image which is generated by the real scene that is previewed by the camera;

$$I(x,y) = I(x,y)^{1/2}$$

(2) calculating a gradient of the image, wherein the gradient of a pixel (x,y) in the image is as below:

$$G_x(x,y) = H(x + 1,y) - H(x - 1,y) \qquad\qquad formula\ (2)$$

$$G_y(x,y) = H(x,y + 1) - H(x,y - 1) \qquad\qquad formula\ (3)$$

wherein $G_x(x, y)$, $G_y(x,y)$, $H(x,y)$ represent a horizontal gradient, a vertical gradient, and a pixel value at a position od=f the pixel (x,y) in the image, respectively. A gradient amplitude and a gradient direction at the pixel (x,y) are respectively as below:

$$G(x,y) = \sqrt{G_x(x,y)^2 + G_y(x,y)^2} \qquad\qquad formula\ (4)$$

$$\alpha(x,y) = \tan^{-1}\left(\frac{G_y(x,y)}{G_x(x,y)}\right) \qquad\qquad formula\ (5)$$

(3) dividing the image into a plurality of grids, each of the grids having 9*9 pixels, and performing projections of prescribed weights for a gradient histogram of each of the grids;

(4) combining each of the grids into large, spatially connected intervals, in which each of the intervals has a plurality of feature vectors of all of the grids, for collecting features by detecting all of the intervals that are overlapped, to combine into final feature vectors, and

(5) identifying and tracking an identification-board-image with these final feature vectors.

In an embodiment, that includes: adopting a virtual model of a human anatomical structure, a physical model of a human, a marker board, and a handheld device, performing a fusion of the physical model of the human and the virtual model of the human anatomical structure, and displaying ten major systems of the human anatomical structure, wherein a model of the human anatomical structure is drawn on the maker board, and the physical model of the human is fixed on the maker board and coincides with the drawn model of the human anatomical structure.

In an embodiment, a picture of the ten major systems of the human anatomical structure is drawn, and related structural functions are introduced, on the marker board; and the physical model of the human is made in an equal proportion manner, based on a size of the virtual model of the human anatomical structure.

In an embodiment, the human anatomical structure display and interaction method includes:

(1) previewing a real scene by a camera of the handheld device, after identifying the maker board successfully, displaying the ten major systems of the human anatomical structure individually and simultaneously fusing the physical model of the human and the virtual model of the human anatomical structure, moving the handheld device so that the camera follows, in order to make an observation of each of the systems of the human anatomical structure from an arbitrary angle;

(2) selecting, by touching a display screen of the handheld device, an interest one of tissue or organs in the model of the human anatomical structure displayed on the display screen, and displaying the tissue or the organs in a single form, in which functions are introduced in words and an observation in detail is performed in an interaction manner by enlargements, reductions, and rotations; and

(3) selecting one of the tissue or the organs to be searched, so as to perform a variation of a texture-color of a corresponding one of the tissue or the organs, and moving the handheld device, in order to search the one of the tissue or the organs to be selected within a view area.

In an embodiment, the ten major systems of the human anatomical structure, which are displayed individually, includes: a skeletal system, a muscular system, a cardiovascular system, a nervous system, an endocrine system, an immune system, a respiratory system, a digestive system, a reproductive system, and a urinary system.

In an embodiment, in the step (1), a transforming relationship of the physical model of the human being registered into a marker-board-space is performed as below:

(1) acquiring, by an infrared localizer and a probing tool, a transformation matrix M1 from a localizer-space to the marker-board-space; and

(2) selecting a set of points of features for the physical model of the human, representing the set of the points in a three-dimension data field for the virtual model of the human anatomical structure into {Vi}, acquiring {Pi} that represents coordinates of a set of points of features of the model of the human anatomical structure in a coordinate system of the localizer, transforming the set of the points into a coordinate system of the marker board represented into {Ii} by the transformation matrix M1 in the step (1), the sets of the points {Vi} and {Ii} being a relationship directly as below:

$$\text{Ii} = \text{R*Vi+T} \hspace{4cm} \text{formula (1)}$$

wherein i=1,2...N, N is a number of the points of features of the physical model of the human to be selected, the best values of R and T are acquired by a point-cloud registration method based on a singular value decomposition, thereby obtaining the transforming relationship from the physical model of the human to an identification-board-space.

In an embodiment, the step of identifying the maker board, in the step (1), comprises:

(1) adopting a Gamma correction method to standardize a color-space for an image which is generated by the real scene that is previewed by the camera;

$$\text{I}(\text{x}, y) = \text{I}(\text{x}, y)^{1/2}$$

(2) calculating a gradient of the image, wherein the gradient of a pixel (x,y) in the image is as below:

$$G_x(\text{x}, \text{y}) = H(\text{x} + 1, \text{y}) - H(\text{x} - 1, \text{y}) \qquad \text{formula (2)}$$

$$G_y(\text{x}, \text{y}) = H(\text{x}, \text{y} + 1) - H(\text{x}, \text{y} - 1) \qquad \text{formula (3)}$$

wherein $G_x(x,y)$, $G_y(x,y)$, $H(x,y)$ represent a horizontal gradient, a vertical gradient, and a pixel value at a position od=f the pixel (x,y) in the image, respectively. A gradient amplitude and a gradient direction at the pixel (x,y) are respectively as below:

$$G(\text{x}, \text{y}) = \sqrt{G_x(x,y)^2 + G_y(x,y)^2} \qquad \text{formula (4)}$$

$$\alpha(\text{x}, \text{y}) = \tan^{-1}\left(\frac{G_y(x,y)}{G_x(x,y)}\right) \qquad \text{formula (5)}$$

(3) dividing the image into a plurality of grids, each of the grids having 9*9 pixels, and performing projections of prescribed weights for a gradient histogram of each of the grids;
(4) combining each of the grids into large, spatially connected intervals, in which each of the intervals has a plurality of feature vectors of all of the grids, for collecting features by detecting all of the intervals that are overlapped, to combine into final feature vectors; and
(5) identifying and tracking an identification-board-image with these final feature vectors.

In an embodiment, the interest one of tissue or organs selected in the model of the human anatomical structure displayed on the display screen by touching the display screen of the handheld device, in the step (2), has the texture-color varying into red within an image frame on the left side of the screen.

In an embodiment, the selecting one of the tissue or the organs to be searched, so as to perform a variation of a texture-color of a corresponding one of the tissue or the organs, and moving the handheld device, in order to search the one of the tissue or the organs to be selected within a view area, in the step (3), further comprises: having a picture prompting a shape of the one of the tissue or the organs, and displaying only the system corresponding to the one of the tissue or the organs within the view area.

In an embodiment, the virtual-real combination-based human anatomical structure display and interaction method, includes:

(1) previewing a real scene by a camera of the handheld device, after identifying the maker board successfully, displaying the ten major systems of the human anatomical structure side by side and simultaneously fusing the physical model of the human and the virtual model of the human anatomical structure, moving the handheld device so that the camera follows, in order to make an observation of each of the systems of the human anatomical structure from an arbitrary angle;
(2) selecting, by touching a display screen of the handheld device, an interest one of tissue or organs in the model of the human anatomical structure displayed on the display screen, and displaying the tissue or the organs in a single form, in which functions are introduced in words and an observation in detail is performed in an interaction manner by enlargements, reductions, and rotations; and
(3) selecting one of the tissue or the organs to be searched, so as to perform a variation of a texture-color of a corresponding one of the tissue or the organs, and moving the handheld device, in order to search the one of the tissue or the organs to be selected within a view area.

In an embodiment, the ten major systems of the human anatomical structure, which are displayed individually, includes: a skeletal system, a muscular system, a cardiovascular system, a nervous system, an endocrine system, an immune system, a respiratory system, a digestive system, a reproductive system, and a urinary system.

In an embodiment, in the step (1), a transforming relationship of the physical model of the human being registered into a marker-board-space is performed as below:

(1) acquiring, by an infrared localizer and a probing tool, a transformation matrix M1 from a localizer-space to the marker-board-space; and

(2) selecting a set of points of features for the physical model of the human, representing the set of the points in a three-dimension data field for the virtual model of the human anatomical structure into {Vi}, acquiring {Pi} that represents coordinates of a set of points of features of the model of the human anatomical structure in a coordinate system of the localizer, transforming the set of the points into a coordinate system of the marker board represented into {Ii} by the transformation matrix M1 in the step (1), the sets of the points {Vi} and {Ii} being a relationship directly as below:

$$Ii = R*Vi+T \qquad\qquad \text{formula (1)}$$

wherein i=1,2...N, N is a number of the points of features of the physical model of the human to be selected, the best values of R and T are acquired by a point-cloud registration method based on a singular value decomposition, thereby obtaining the transforming relationship from the physical model of the human to an identification-board-space.

In an embodiment, the step of identifying the maker board, in the step (1), comprises:

(1) adopting a Gamma correction method to standardize a color-space for an image which is generated by the real scene that is previewed by the camera;

$$I(x,y) = I(x,y)^{1/2}$$

(2) calculating a gradient of the image, wherein the gradient of a pixel (x,y) in the image is as below:

$$G_x(x,y) = H(x+1,y) - H(x-1,y) \qquad \text{formula (2)}$$

$$G_y(x,y) = H(x,y+1) - H(x,y-1) \qquad \text{formula (3)}$$

wherein $G_x(x,y)$, $G_y(x,y)$, H(x,y) represent a horizontal gradient, a vertical gradient, and a pixel value at a position od=f the pixel (x,y) in the image, respectively. A gradient amplitude and a gradient direction at the pixel (x,y) are respectively as below:

$$G(x,y) = \sqrt{G_x(x,y)^2 + G_y(x,y)^2} \qquad \text{formula (4)}$$

$$\alpha(x,y) = \tan^{-1}\left(\frac{G_y(x,y)}{G_x(x,y)}\right) \qquad \text{formula (5)}$$

(3) dividing the image into a plurality of grids, each of the grids having 9*9 pixels, and performing projections of prescribed weights for a gradient histogram of each of the grids;
(4) combining each of the grids into large, spatially connected intervals, in which each of the intervals has a plurality of feature vectors of all of the grids, for collecting features by detecting all of the intervals that are overlapped, to combine into final feature vectors; and
(5) identifying and tracking an identification-board-image with these final feature vectors.

In an embodiment, the interest one of tissue or organs selected in the model of the human anatomical structure displayed on the display screen by touching the display screen of the handheld device, in the step (2), has the texture-color varying into red within an image frame on the left side of the screen.

In an embodiment, the selecting one of the tissue or the organs to be searched, so as to perform a variation of a texture-color of a corresponding one of the tissue or the organs, and moving the handheld device, in order to search the one of the tissue or the organs to be selected within a view area, in the step (3), further comprises: having a picture prompting a shape of the one of the tissue or the organs, and displaying only the system corresponding to the one of the tissue or the organs within the view area.

In an embodiment, the handheld device is a tablet computer.

In an embodiment, the handheld device is a smart phone.

The present disclosure provides a virtual-real combination-based human anatomical structure display and interaction method, which mainly includes adopting, such as a virtual model of a human anatomical structure, a physical model of a human, a marker board, and a handheld device, performing a perfect fusion of the physical model of the human and the virtual model of the human anatomical structure, displaying ten major systems of the human anatomical structure, and tagging the name of main organs or tissue of each of the systems; in the present disclosure, selecting, by touching a display screen of the handheld device, an interest one of tissue or organs in the model of the human anatomical structure displayed on the display screen, and displaying the tissue or the organs in a single form, in which functions are introduced in words and an observation in detail is performed in an interaction manner by enlargements, reductions, and rotations; and selecting one of the tissue or the organs to be searched, so as to perform a variation of a texture-color of a corresponding one of the tissue or the organs, and moving the handheld device, in order to search the one of the tissue or the organs to be selected within a view area.

In the present disclosure, the maker board is used to draw the model of the human anatomical structure, the physical model of the human is fixed on the maker board and coincides with the drawn model of the human anatomical structure, wherein the other region of the marker board is used to draw a picture of the ten major systems of the human anatomical structure, and to introduce functions corresponding to the structure, and the physical model of the human is made in an equal proportion manner, based on a size of the virtual model of the human anatomical structure.

The present method not only enables to be acquired comprehensive and accurate information by virtual scenes, but also enables to display the virtual scenes more intuitively and really by an interaction with real scenes.

Specifically, a virtual-real combination-based human anatomical structure display and interaction method of the present disclosure includes:

1. previewing a real scene by a camera of the handheld device, after identifying the maker board successfully, displaying the model of the human anatomical structure fused with a human entity in a real space in a superimposition manner on the display screen of the handheld device; further, it is able to display the ten major systems of the human anatomical structure individually or side by side, which includes a skeletal system, a muscular system, a cardiovascular system, a nervous system, an endocrine system, an immune system, a respiratory system, a digestive system, a reproductive system, and a urinary system, and tagging the name of main organs or tissue of each of the systems; and simultaneously fusing the physical model of the human and the virtual model of the human anatomical structure, moving the handheld device so that the camera follows, in order to make an observation of each of the systems of the human anatomical structure from an arbitrary angle.

A transforming relationship of the physical model of the human being registered into a marker-board-space is performed as below:

(1) acquiring, by an infrared localizer and a probing tool, a transformation matrix M1 from a localizer-space to the marker-board-space; and

(2) selecting a set of points of features for the physical model of the human, representing the set of the points in a three-dimension data field for the virtual model of the human anatomical structure into {Vi}, acquiring {Pi} that represents coordinates of a set of points of features of the model of the human anatomical structure in a coordinate system of the localizer, transforming the set of the points into a coordinate system of the marker board represented into {Ii} by the transformation matrix M1 in the step (1), the sets of the points {Vi} and {Ii} being a relationship directly as below:

$$Ii = R*Vi+T \qquad\qquad formula\ (1)$$

wherein i=1,2...N, N is a number of the points of features of the physical model of the human to be selected, the best values of R and T are acquired by a point-cloud registration method based on a singular value decomposition, thereby obtaining the transforming relationship from the physical model of the human to an identification-board-space;

a method of identifying the maker board includes:

(1) adopting a Gamma correction method to standardize a color-space for an image which is generated by the real scene that is previewed by the camera;

$$I(x, y) = I(x, y)^{1/2}$$

(2) calculating a gradient of the image, wherein the gradient of a pixel (x,y) in the image is as below:

$$G_x(x, y) = H(x + 1, y) - H(x - 1, y) \qquad \text{formula (2)}$$

$$G_y(x, y) = H(x, y + 1) - H(x, y - 1) \qquad \text{formula (3)}$$

wherein $G_x(x,y)$, $G_y(x,y)$, $H(x,y)$ represent a horizontal gradient, a vertical gradient, and a pixel value at a position od=f the pixel (x,y) in the image, respectively. A gradient amplitude and a gradient direction at the pixel (x,y) are respectively as below:

$$G(x, y) = \sqrt{G_x(x, y)^2 + G_y(x, y)^2} \qquad \text{formula (4)}$$

$$\alpha(x, y) = \tan^{-1}\left(\frac{G_y(x,y)}{G_x(x,y)}\right) \qquad \text{formula (5)}$$

(3) dividing the image into a plurality of grids, each of the grids having 9*9 pixels, and performing projections of prescribed weights for a gradient histogram of each of the grids;
(4) combining each of the grids into large, spatially connected intervals, in which each of the intervals has a plurality of feature vectors of all of the grids, for collecting features by detecting all of the intervals that are overlapped, to combine into final feature vectors; and
(5) identifying and tracking an identification-board-image with these final feature vectors.

2. selecting, by touching a display screen of the handheld device, an interest one of tissue or organs in the model of the human anatomical structure displayed on the display screen, having the one of the tissue or organs with the texture-color varying into red, displaying the tissue or the organs in a single form and introducing its function in words within an image frame on the left side of the screen, and at the same time, performing an observation in detail by enlarging, reducing, or rotating interactions; and

3. selecting one of the tissue or the organs to be searched, varying a texture-color of a corresponding one of the tissue or the organs, having a picture prompting a shape of the one of the tissue or the organs, at the time, displaying only the system corresponding to the one of the tissue or the organs within the view area, if the handheld device is moved, it can be done to search the one of the tissue or the organs to be selected within a view area.

After actual operations, the results show that, the virtual-real combination-based human anatomical structure display and interaction method of the present disclosure combines the model of the human anatomical structure, the physical model of the human, the marker board, and the handheld device. It can implement a perfect fusion of the physical model of the human and the virtual model of the human anatomical structure, displaying the ten major systems of the human anatomical structure, and displaying the tissue or the organs in a single form, in which functions are introduced in words and an observation in detail is performed in an interaction manner by enlargements, reductions, and rotations. In addition, the present method not only enables to be acquired comprehensive and accurate information by virtual scenes, but also enables to display the virtual scenes more intuitively and really by the interaction with real scenes.

BRIEF DESCRIPTION OF THE DRAWINGS

FIG. 1 is a principle diagram illustrating a virtual-real combination-based human anatomical structure display and interaction method of present disclosure.
FIG. 2 is a diagram illustrating a transforming relationship of a physical model of a human being registered into a marker-board-space of the present disclosure.

The present disclosure will be further illustrated by specific embodiments with reference to the drawings.

DETAILED DESCRIPTION OF PREFERRED EMBODIMENTS

Embodiment 1:

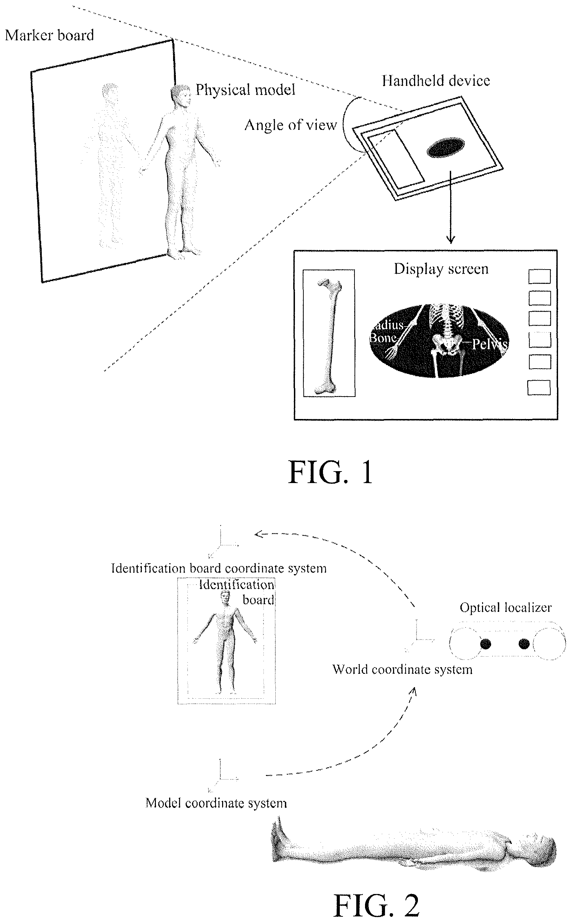

As shown in FIG. 1, a virtual-real combination-based human anatomical structure display and interaction method of present disclosure, includes: adopting a virtual model of a human anatomical structure, a physical model of a human, a marker board, and a handheld device, wherein the physical model of the human is made in an equal proportion manner, based on a size of the virtual model of the human anatomical structure.

A model of the human anatomical structure is drawn on the maker board, the physical model of the human is fixed on the maker board and coincides with the drawn model of the human anatomical structure.

A transforming relationship of the physical model of the human being registered into a marker-board-space is performed as below:

(1) acquiring, by an infrared localizer and a probing tool, a transformation matrix M1 from a localizer-space to the marker-board-space; and

(2) selecting a set of points of features for the physical model of the human, representing the set of the points in a three-dimension data field for the virtual model of the human anatomical structure into {Vi}, acquiring {Pi} that represents coordinates of a set of points of features of the model of the human anatomical structure in a coordinate system of the localizer, transforming the set of the points into a coordinate system of the marker board represented into {Ii} by the transformation matrix M1 in the step (1), the sets of the points {Vi} and {Ii} being a relationship directly as below:

$$Ii = R * Vi + T \qquad \text{formula (1)}$$

wherein i=1,2...N, N is a number of the points of features of the physical model of the human to be selected, the best values of R and T are acquired by a point-cloud registration method based on a singular value decomposition, thereby obtaining the transforming relationship from the physical model of the human to an identification-board-space.

A method of identifying the maker board includes:

(1) adopting a Gamma correction method to standardize a color-space for an image which is generated by the real scene that is previewed by the camera;

$$I(x, y) = I(x, y)^{1/2}$$

(2) calculating a gradient of the image, wherein the gradient of a pixel (x,y) in the image is as below:

$$G_x(x, y) = H(x + 1, y) - H(x - 1, y) \qquad \text{formula (2)}$$

$$G_y(x, y) = H(x, y + 1) - H(x, y - 1) \qquad \text{formula (3)}$$

wherein $G_x(x,y)$, $G_y(x,y)$, $H(x,y)$ represent a horizontal gradient, a vertical gradient, and a pixel value at a position od=f the pixel (x,y) in the image, respectively. A gradient amplitude and a gradient direction at the pixel (x,y) are respectively as below:

$$G(x, y) = \sqrt{G_x(x, y)^2 + G_y(x, y)^2} \qquad \text{formula (4)}$$

$$\alpha(x, y) = \tan^{-1}\left(\frac{G_y(x,y)}{G_x(x,y)}\right) \qquad \text{formula (5)}$$

(3) dividing the image into a plurality of grids, each of the grids having 9*9 pixels, and performing projections of prescribed weights for a gradient histogram of each of the grids.

(4) combining each of the grids into large, spatially connected intervals, in which each of the intervals has a plurality of feature vectors of all of the grids, for collecting features by detecting all of the intervals that are overlapped, to combine into final feature vectors. and

(5) identifying and tracking an identification-board-image with these final feature vectors.

In present embodiment, previewing a real scene by a camera of the handheld device, after identifying the maker board successfully, displaying the model of the human anatomical structure fused with a human entity in a real space in a superimposition manner on the display screen of the handheld device. It is able to display the ten major systems of the human anatomical structure individually or side by side, which includes a skeletal system, a muscular system, a cardiovascular system, a nervous system, an endocrine system, an immune system, a respiratory system, a digestive system, a reproductive system, and a urinary system, and tagging the name of main organs or tissue of each of the systems.

When each of the systems of the model of the human anatomical structure is displayed, they are able to select, by touching a display screen of the handheld device, an interest one of tissue or organs in the model of the human anatomical structure displayed on the display screen, to the tissue or the organs in a single form, in which functions are introduced in words and an observation in detail is performed in an interaction manner by enlargements, reductions, and rotations.

It can further select one of the tissue or the organs to be searched, to vary a texture-color of a corresponding one of the tissue or the organs, to move the handheld device, in order to search the one of the tissue or the organs to be selected within a view area.

After actual operations, the results show that, the present method can realize a perfect fusion of the physical model of the human and the virtual model of the human anatomical structure, display ten major systems of the human anatomical structure, display a function of a single tissue or the organ and an introduce of text, and perform an observation in detail by enlarging, reducing, or rotating interactions. In addition, the present method not only enables to be acquired comprehensive and accurate information by virtual scenes, but also enables to display the virtual scenes more intuitively and really by the interaction with real scenes.

**Claims**

1. A virtual-real combination-based human anatomical structure display and interaction method, comprising: adopting a virtual model of a human anatomical structure, a physical model of a human, a marker board, and a handheld device, performing a fusion of the physical model of the human and the virtual model of the human anatomical structure, and displaying ten major systems of the human anatomical structure, wherein a model of the human anatomical structure is drawn on the maker board, the physical model of the human is fixed on the maker board and coincides with the drawn model of the human anatomical structure, and the method comprises:

   (1) previewing a real scene by a camera of the handheld device, after identifying the maker board successfully, displaying the ten major systems of the human anatomical structure individually and simultaneously fusing the physical model of the human and the virtual model of the human anatomical structure, moving the handheld device so that the camera follows, in order to make an observation of each of the systems of the human anatomical structure from an arbitrary angle;

   (2) selecting, by touching a display screen of the handheld device, an interest one of tissue or organs in the model of the human anatomical structure displayed on the display screen, and displaying the tissue or the organs in a single form, in which functions are introduced in words and an observation in detail is performed in an interaction manner by enlargements, reductions, and rotations; and

   (3) selecting one of the tissue or the organs to be searched, so as to perform a variation of a texture-color of a corresponding one of the tissue or the organs, and moving the handheld device, in order to search the one of the tissue or the organs to be selected within a view area;

   wherein in the step (1),
   a transforming relationship of the physical model of the human being registered into a marker-board-space is performed as below:

   (1) acquiring, by an infrared localizer and a probing tool, a transformation matrix M1 from a localizer-space to the marker-board-space; and

(2) selecting a set of points of features for the physical model of the human, representing the set of the points in a three-dimension data field for the virtual model of the human anatomical structure into {Vi}, acquiring {Pi} that represents coordinates of a set of points of features of the model of the human anatomical structure in a coordinate system of the localizer, transforming the set of the points into a coordinate system of the marker board represented into {Ii} by the transformation matrix M1 in the step (1), the sets of the points {Vi} and {Ii} being a relationship directly as below:

$$Ii = R*Vi+T \qquad\qquad \text{formula (1)}$$

wherein i=1,2...N, N is a number of the points of features of the physical model of the human to be selected, the best values of R and T are acquired by a point-cloud registration method based on a singular value decomposition, thereby obtaining the transforming relationship from the physical model of the human to an identification-board-space;

wherein the step of identifying the maker board, in the step (1), comprises:

(1) adopting a Gamma correction method to standardize a color-space for an image which is generated by the real scene that is previewed by the camera;

$$I(x, y) = I(x, y)^{1/2}$$

(2) calculating a gradient of the image, wherein the gradient of a pixel (x,y) in the image is as below:

$$G_x(x, y) = H(x + 1, y) - H(x - 1, y) \qquad\qquad \text{formula (2)}$$

$$G_y(x, y) = H(x, y + 1) - H(x, y - 1) \qquad\qquad \text{formula (3)}$$

wherein $G_x(x,y)$, $G_y(x,y)$, H(x, y) represent a horizontal gradient, a vertical gradient, and a pixel value at a position od=f the pixel (x,y) in the image, respectively. A gradient amplitude and a gradient direction at the pixel (x,y) are respectively as below:

$$G(x, y) = \sqrt{G_x(x, y)^2 + G_y(x, y)^2} \qquad\qquad \text{formula (4)}$$

$$\alpha(x, y) = \tan^{-1}\left(\frac{G_y(x,y)}{G_x(x,y)}\right) \qquad\qquad \text{formula (5)}$$

(3) dividing the image into a plurality of grids, each of the grids having 9*9 pixels, and performing projections of prescribed weights for a gradient histogram of each of the grids;
(4) combining each of the grids into large, spatially connected intervals, in which each of the intervals has a plurality of feature vectors of all of the grids, for collecting features by detecting all of the intervals that are overlapped, to combine into final feature vectors. and
(5) identifying and tracking an identification-board-image with these final feature vectors.

**2.** A virtual-real combination-based human anatomical structure display and interaction method, comprising: adopting a virtual model of a human anatomical structure, a physical model of a human, a marker board, and a handheld device, performing a fusion of the physical model of the human and the virtual model of the human anatomical structure, and displaying ten major systems of the human anatomical structure, wherein a model of the human anatomical structure is drawn on the maker board, and the physical model of the human is fixed on the maker board and coincides with the drawn model of the human anatomical structure.

**3.** The virtual-real combination-based human anatomical structure display and interaction method as claimed in claim 2, wherein a picture of the ten major systems of the human anatomical structure is drawn, and related structural functions are introduced, on the marker board; and the physical model of the human is made in an equal proportion manner, based on a size of the virtual model of the human anatomical structure.

4. The virtual-real combination-based human anatomical structure display and interaction method as claimed in claim 2, comprising:

(1) previewing a real scene by a camera of the handheld device, after identifying the maker board successfully, displaying the ten major systems of the human anatomical structure individually and simultaneously fusing the physical model of the human and the virtual model of the human anatomical structure, moving the handheld device so that the camera follows, in order to make an observation of each of the systems of the human anatomical structure from an arbitrary angle;
(2) selecting, by touching a display screen of the handheld device, an interest one of tissue or organs in the model of the human anatomical structure displayed on the display screen, and displaying the tissue or the organs in a single form, in which functions are introduced in words and an observation in detail is performed in an interaction manner by enlargements, reductions, and rotations; and
(3) selecting one of the tissue or the organs to be searched, so as to perform a variation of a texture-color of a corresponding one of the tissue or the organs, and moving the handheld device, in order to search the one of the tissue or the organs to be selected within a view area.

5. The virtual-real combination-based human anatomical structure display and interaction method as claimed in claim 4, wherein the ten major systems of the human anatomical structure, which are displayed individually, comprises a skeletal system, a muscular system, a cardiovascular system, a nervous system, an endocrine system, an immune system, a respiratory system, a digestive system, a reproductive system, and a urinary system.

6. The virtual-real combination-based human anatomical structure display and interaction method as claimed in claim 4, wherein in the step (1),
a transforming relationship of the physical model of the human being registered into a marker-board-space is performed as below:

(1) acquiring, by an infrared localizer and a probing tool, a transformation matrix M1 from a localizer-space to the marker-board-space; and
(2) selecting a set of points of features for the physical model of the human, representing the set of the points in a three-dimension data field for the virtual model of the human anatomical structure into {Vi}, acquiring {Pi} that represents coordinates of a set of points of features of the model of the human anatomical structure in a coordinate system of the localizer, transforming the set of the points into a coordinate system of the marker board represented into {Ii} by the transformation matrix M1 in the step (1), the sets of the points {Vi} and {Ii} being a relationship directly as below:

$$Ii = R*Vi + T \hspace{4cm} \text{formula (1)}$$

wherein i=1,2...N, N is a number of the points of features of the physical model of the human to be selected, the best values of R and T are acquired by a point-cloud registration method based on a singular value decomposition, thereby obtaining the transforming relationship from the physical model of the human to an identification-board-space.

7. The virtual-real combination-based human anatomical structure display and interaction method as claimed in claim 4, wherein the step of identifying the maker board, in the step (1), comprises:

(1) adopting a Gamma correction method to standardize a color-space for an image which is generated by the real scene that is previewed by the camera;

$$I(x,y) = I(x,y)^{1/2}$$

(2) calculating a gradient of the image, wherein the gradient of a pixel (x,y) in the image is as below:

$$G_x(x, y) = H(x + 1, y) - H(x - 1, y) \qquad \text{formula (2)}$$

$$G_y(x, y) = H(x, y + 1) - H(x, y - 1) \qquad \text{formula (3)}$$

wherein $G_x(x,y)$, $G_y(x,y)$, $H(x,y)$ represent a horizontal gradient, a vertical gradient, and a pixel value at a position od=f the pixel (x,y) in the image, respectively. A gradient amplitude and a gradient direction at the pixel (x,y) are respectively as below:

$$G(x, y) = \sqrt{G_x(x, y)^2 + G_y(x, y)^2} \qquad \text{formula (4)}$$

$$\alpha(x, y) = \tan^{-1}\left(\frac{G_y(x,y)}{G_x(x,y)}\right) \qquad \text{formula (5)}$$

(3) dividing the image into a plurality of grids, each of the grids having 9*9 pixels, and performing projections of prescribed weights for a gradient histogram of each of the grids;

(4) combining each of the grids into large, spatially connected intervals, in which each of the intervals has a plurality of feature vectors of all of the grids, for collecting features by detecting all of the intervals that are overlapped, to combine into final feature vectors; and

(5) identifying and tracking an identification-board-image with these final feature vectors.

8. The virtual-real combination-based human anatomical structure display and interaction method as claimed in claim 4, wherein the interest one of tissue or organs selected in the model of the human anatomical structure displayed on the display screen by touching the display screen of the handheld device, in the step (2), has the texture-color varying into red within an image frame on the left side of the screen.

9. The virtual-real combination-based human anatomical structure display and interaction method as claimed in claim 4, wherein the step of selecting one of the tissue or the organs to be searched, so as to perform a variation of a texture-color of a corresponding one of the tissue or the organs, and moving the handheld device, in order to search the one of the tissue or the organs to be selected within a view area, in the step (3), further comprises: having a picture prompting a shape of the one of the tissue or the organs, and displaying only the system corresponding to the one of the tissue or the organs within the view area.

10. The virtual-real combination-based human anatomical structure display and interaction method as claimed in claim 2, comprising:

(1) previewing a real scene by a camera of the handheld device, after identifying the maker board successfully, displaying the ten major systems of the human anatomical structure side by side and simultaneously fusing the physical model of the human and the virtual model of the human anatomical structure, moving the handheld device so that the camera follows, in order to make an observation of each of the systems of the human anatomical structure from an arbitrary angle;

(2) selecting, by touching a display screen of the handheld device, an interest one of tissue or organs in the model of the human anatomical structure displayed on the display screen, and displaying the tissue or the organs in a single form, in which functions are introduced in words and an observation in detail is performed in an interaction manner by enlargements, reductions, and rotations; and

(3) selecting one of the tissue or the organs to be searched, so as to perform a variation of a texture-color of a corresponding one of the tissue or the organs, and moving the handheld device, in order to search the one of the tissue or the organs to be selected within a view area.

11. The virtual-real combination-based human anatomical structure display and interaction method as claimed in claim 10, wherein the ten major systems of the human anatomical structure, which are displayed individually, comprises a skeletal system, a muscular system, a cardiovascular system, a nervous system, an endocrine system, an immune system, a respiratory system, a digestive system, a reproductive system, and a urinary system.

12. The virtual-real combination-based human anatomical structure display and interaction method as claimed in claim 10, wherein in the step (1),
a transforming relationship of the physical model of the human being registered into a marker-board-space is performed as below:

(1) acquiring, by an infrared localizer and a probing tool, a transformation matrix M1 from a localizer-space to the marker-board-space; and

(2) selecting a set of points of features for the physical model of the human, representing the set of the points in a three-dimension data field for the virtual model of the human anatomical structure into {Vi}, acquiring {Pi} that represents coordinates of a set of points of features of the model of the human anatomical structure in a coordinate system of the localizer, transforming the set of the points into a coordinate system of the marker board represented into {Ii} by the transformation matrix M1 in the step (1), the sets of the points {Vi} and {Ii} being a relationship directly as below:

$$Ii = R * Vi + T \qquad\qquad \text{formula (1)}$$

wherein i=1,2...N, N is a number of the points of features of the physical model of the human to be selected, the best values of R and T are acquired by a point-cloud registration method based on a singular value decomposition, thereby obtaining the transforming relationship from the physical model of the human to an identification-board-space.

13. The virtual-real combination-based human anatomical structure display and interaction method as claimed in claim 10, wherein the step of identifying the maker board, in the step (1), comprises:

(1) adopting a Gamma correction method to standardize a color-space for an image which is generated by the real scene that is previewed by the camera;

$$I(x, y) = I(x, y)^{1/2}$$

(2) calculating a gradient of the image, wherein the gradient of a pixel (x,y) in the image is as below:

$$G_x(x, y) = H(x + 1, y) - H(x - 1, y) \qquad\qquad \text{formula (2)}$$

$$G_y(x, y) = H(x, y + 1) - H(x, y - 1) \qquad\qquad \text{formula (3)}$$

wherein $G_x(x,y)$, $G_y(x,y)$, $H(x,y)$ represent a horizontal gradient, a vertical gradient, and a pixel value at a position od=f the pixel (x,y) in the image, respectively. A gradient amplitude and a gradient direction at the pixel (x,y) are respectively as below:

$$G(x, y) = \sqrt{G_x(x, y)^2 + G_y(x, y)^2} \qquad\qquad \text{formula (4)}$$

$$\alpha(x, y) = \tan^{-1}\left(\frac{G_y(x,y)}{G_x(x,y)}\right) \qquad\qquad \text{formula (5)}$$

(3) dividing the image into a plurality of grids, each of the grids having 9*9 pixels, and performing projections of prescribed weights for a gradient histogram of each of the grids;

(4) combining each of the grids into large, spatially connected intervals, in which each of the intervals has a plurality of feature vectors of all of the grids, for collecting features by detecting all of the intervals that are overlapped, to combine into final feature vectors; and

(5) identifying and tracking an identification-board-image with these final feature vectors.

14. The virtual-real combination-based human anatomical structure display and interaction method as claimed in claim 10, wherein the interest one of tissue or organs selected in the model of the human anatomical structure displayed on the display screen by touching the display screen of the handheld device, in the step (2), has the texture-color varying into red within an image frame on the left side of the screen.

15. The virtual-real combination-based human anatomical structure display and interaction method as claimed in claim 10, wherein the step of selecting one of the tissue or the organs to be searched, so as to perform a variation of a texture-color of a corresponding one of the tissue or the organs, and moving the handheld device, in order to search the one of the tissue or the organs to be selected within a view area, in the step (3), further comprises: having a picture prompting a shape of the one of the tissue or the organs, and displaying only the system corresponding to the one of the tissue or the organs within the view area.

16. The virtual-real combination-based human anatomical structure display and interaction method as claimed in claim 2, wherein the handheld device is a tablet computer.

17. The virtual-real combination-based human anatomical structure display and interaction method as claimed in claim 2, wherein the handheld device is a smart phone.

Marker board

Physical model

Angle of view

Handheld device

Display screen

Radius Bone

Pelvis

## FIG. 1

Identification board coordinate system

Identification board

Optical localizer

World coordinate system

Model coordinate system

## FIG. 2

<table>
<tr><td colspan="2" align="center">**INTERNATIONAL SEARCH REPORT**</td><td>International application No.<br><br>**PCT/CN2018/097731**</td></tr>
</table>

**A.      CLASSIFICATION OF SUBJECT MATTER**

G06F 3/01(2006.01)i;   G06T 19/00(2011.01)i

According to International Patent Classification (IPC) or to both national classification and IPC

**B.      FIELDS SEARCHED**

Minimum documentation searched (classification system followed by classification symbols)

G06F 3/-; G06T 19/-

Documentation searched other than minimum documentation to the extent that such documents are included in the fields searched

Electronic data base consulted during the international search (name of data base and, where practicable, search terms used)

CNTXT, CNKI, CNABS, SIPOABS, DWPI: 实物, 真实, 设备, 模型, 人体解剖, 虚拟, 系统, 固定, 人体, 标记板, practicality, reality, equipment, former, anatomy of the human body, dummy, system, fixation, human body, marking plate

**C.      DOCUMENTS CONSIDERED TO BE RELEVANT**

| Category* | Citation of document, with indication, where appropriate, of the relevant passages | Relevant to claim No. |
|---|---|---|
| A | CN 106293082 A (CHENGDU CTC TIANFU DIGITAL TECHNOLOGY INC.) 04 January 2017 (2017-01-04)<br>entire document | 1-17 |
| A | CN 105487653 A (HENAN YORK ANIMATION FILM CO., LTD.) 13 April 2016 (2016-04-13)<br>entire document | 1-17 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 October 2018** | **06 November 2018** |

| Name and mailing address of the ISA/CN | Authorized officer |
|---|---|
| **State Intellectual Property Office of the P. R. China**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/097731**

| Patent document cited in search report | | | Publication date (day/month/year) | Patent family member(s) | | | Publication date (day/month/year) |
|---|---|---|---|---|---|---|---|
| CN | 106293082 | A | 04 January 2017 | None | | | |
| CN | 105487653 | A | 13 April 2016 | CN | 105487653 | B | 21 September 2018 |

Form PCT/ISA/210 (patent family annex) (January 2015)